# EUROPEAN PATENT APPLICATION

(11) **EP 4 687 007 A1**
(43) Date of publication of application: **04.02.2026**
(21) Application number: 25189131.3
(22) Date of filing: 11.07.2025
(51) Int. Cl.: G06F 1/24, G06F 1/3237

(54) **CLOCK GATING CIRCUIT AND CORRESPONDING SYSTEM**

(30) Priority: 29.07.2024 IT 202400017590
(71) Applicant: STMicroelectronics International N.V., 1228 Plan-les-Ouates, Geneva (CH)
(72) Inventor: CARPENTIERI, Donato, I-84085 Mercato San Severino (Salerno) (IT); ZAFFARANA, Luigi, I-95021 Aci Trezza (Catania) (IT); MANGANO, Daniele, I-95027 San Gregorio di Catania (Catania) (IT); PROLOGO, Giuseppe, I-95123 Catania (IT)
(74) Representative: Buzzi, Notaro & Antonielli d'Oulx S.p.A.

(57) **Abstract**

A reset domain crossing circuit (100; 200) is configured to de-assert said clock enable signal (CE) in response to receiving an asserted software reset write request signal (WR), and is configured to assert said clock enable signal (CE) in response to detecting a falling edge on a software reset signal (SR).

The domain crossing circuit (100; 200) comprises:
a synchronizer (130; 240) receiving as input said software reset signal (SR) and producing as output a synchronized software reset signal (SR),
a falling edge detection circuit (110; 210) receiving as input the synchronized software reset signal (SR) from the synchronizer (130; 240) and producing as output a falling edge signal (FE) upon the detection of a falling edge on the synchronized software reset signal (SR),
a clock enable circuit (120; 230) coupled to the falling edge detection circuit (110) and receiving as input the falling edge signal (FE).

## Description

### Technical field

The description relates to clocking techniques in sequential circuits.

Solutions as described herein can be applied, for instance, to processor circuitry such as, for instance, microcontroller units (MCUs) in order to deal with reset domain crossing issues.

### Description of the related art

Processors such as, by way of example, microprocessors may include modules configured for stand-alone reset via writing on a dedicated bit register; these are usually referred to as software (SW) reset modules.

Multiple reset domains can coexist in a design. For instance, two reset domains may be mutually connected so that, in response to SW reset being asserted in a source reset domain, flip-flops (FFs) in a destination reset domain can be violated during respective hold/setup phases.

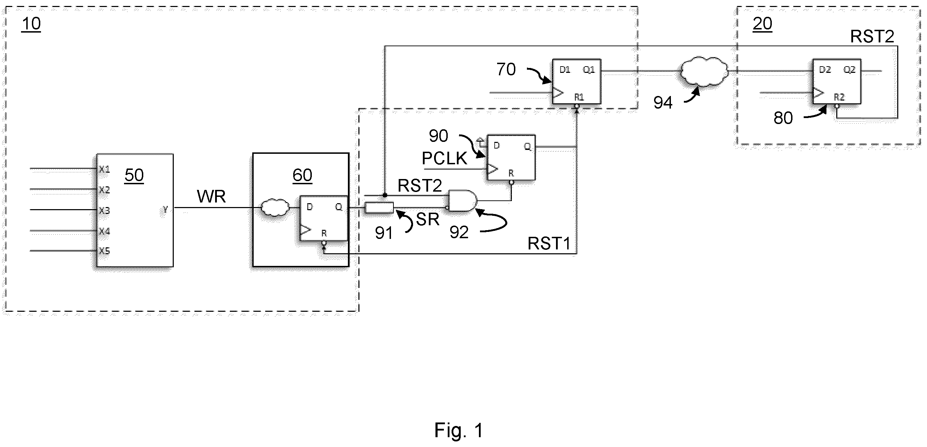

In this regard, an exemplary portion of a processor comprising a first reset domain for instance, a source reset domain, and a second reset domain for instance, a destination reset domain, is illustrated in Figure 1.

Figure 1 is illustrative of a portion of a processor, highlighting the possible presence of two reset domains i.e., a first reset domain 10 and a second reset domain 20. As illustrated, the first reset domain 10 includes a transition decode circuit 50, a software reset register 60, and a first flip-flop 70, whereas the second reset domain 20 includes a second flip-flop 80. In general, the first flip-flop 70 and the second flip-flop 80 may represent any generic sequential circuit receiving external clock and reset signals.

The transition decode circuit 50 is coupled to the software reset register 60 and receives a plurality of input signals X1, ..., X5.

Accordingly, the transition decode circuit 50 produces as output a write request signal WR directed to the software reset register 60 which, in turn, is coupled to the first flip-flop 70 and produces as output a software reset signal SR in response to the reception of the write request signal WR from the transition decode circuit 50.

The software reset signal SR is received as an input by a delay cell 91, and by an AND gate 92, which has an inverting input coupled to the delay cell 91. The AND gate 92 also receives on another input terminal a reset signal RST2, and has an output terminal coupled to a reset terminal R of a third element 90.

The third element 90 is represented in the figures as a flip-flop for simplicity: in fact the third element 90 may be a reset synchronizer including two flip-flops, the first one having an input terminal D coupled to a constant logic '1' value, an output terminal Q coupled to a D input of the second flip-flop, with an output terminal Q of the second flip-flop coupled to the reset terminal R of the first flip-flop 70, and a clock terminal coupled to a main system clock signal PCLK and suited to be clocked in a target clock domain. The reset signal is passed through the flip-flops in the element 90 to facilitate an assertion that is adequately aligned with the target clock signal.

The element 90 is configured to synchronize reset signals, for instance, a first reset signal RST1 directed towards the first reset domain 10, and a second reset signal RST2 directed towards the second reset domain 20. The reset signals RST1, RST2 are de-asserted in order to perform a reset in the circuit they are directed to such as, for instance, the flip-flop 70. In fact, as illustrated, the reset signals are received by the respective circuits at an inverted terminal, therefore the reset signals RST1 and RST2 shall be de-asserted in order to cause the flip-flops to reset.

The reset synchronizer 90 facilitates operation such that reset assertion at the output Q (to 1, reset release) is synchronous with a target clock domain by countering timing violations on the flip-flop 70 (and also on the flip-flop 60). Conversely, reset de-assertion (to 0, for reset application) can be asynchronous.

During a software reset operation involving multiple reset domains (for instance, the source reset domain 10 and the destination reset domain 20 with the software reset signal originating from said source reset domain 10) the input terminal D of flip-flops comprised in the destination reset domain 20 - such as, for instance, the second flip-flop 80 - may cause flip-flop toggling near a clock edge (a rising edge or a falling edge) while the source reset domain flip-flops 70 are being reset, thus causing possible metastability in the circuit.

Attempts to address such a drawback i.e., possible violations of the flip-flops in the destination reset domain during hold/setup phases, may involve gating the clock of destination flip-flops (FFs). This approach relies on the fact that, if the destination FFs are not receiving the clock in response to source reset, the setup/hold problem referred to in the foregoing is effectively countered.

For instance, a hardware (HW) module may disable the clock of a destination reset domain in response to a SW reset of the source reset domain. Such a clock can be re-enabled (only) after waiting for a predetermined amount of clock cycles from the assertion of the SW reset in the source reset domain, in order to allow the correct propagation of the reset signal across the circuit, thus giving rise to an open loop solution.

A document that can be related to such an approach is US 2016/048155 A1, which discloses an on-board reset circuit for a system-on-chip (SoC) addressing the problem of meta-stability in flip-flops on asynchronous reset that arises when different power domains or reset domains receive resets from different sources. To ameliorate the problem, a reset signal is asserted and de-asserted while the clocks are gated. The clocks are re-instated for a minimum period of time following assertion, or de-assertion, so that logic having synchronous reset can also receive the reset.

Other documents illustrative of related art include CN 116126116 A, US 2024/094789 A1, US 2020/374377 A1, US 11 693 461 B1, US 2023/244841 A1, and US 2018/004876 A1.

Therefore, open-loop hardware solutions for preventing reset domain crossing issues may imply that propagation of the reset signal occurs within a predetermined number of clock cycles whose value may be dependent on process, voltage, and temperature parameters (PVT).

This may be the case when delay cells are added on the reset signal paths for functional purposes, so that the number of clock cycles can change with a high spread.

### Object and summary

An object of the solutions described herein is to contribute in addressing the issues discussed in the foregoing.

Such an object can be achieved via a circuit having the features set forth in the claims that follow.

As mentioned before, solutions as described herein relate to a circuit, comprising a first sequential circuitry configured to operate under a first clock signal in a first clock domain, a second sequential circuitry configured to operate under a second clock signal in a second clock domain, a transition decode circuitry configured to generate a software reset write request signal, a software reset register coupled to the transition decode circuitry and configured to produce a software reset signal in response to the software reset write request signal from the transition decode circuit, a reset domain crossing circuitry configured to de-assert a clock enable signal in response to receiving the software reset write request signal from the transition decode circuitry, and to assert the clock enable signal in response to a falling edge detected on the software reset signal from the software reset register, and a clock gating cell coupled to the reset domain crossing circuitry and configured to disable the second clock signal of the second sequential circuitry in response to the clock enable signal being de-asserted by the reset domain crossing circuitry.

In solutions as described herein, the reset domain crossing circuitry may comprise a clock enable circuit configured to de-assert the clock enable signal in response to receiving the software reset write request signal from the transition decode circuitry in the absence of a falling edge detected on the software reset signal from the software reset register, and assert the clock enable signal in response to a falling edge detected on the software reset signal from the software reset register in the absence of a software reset write request signal from the transition decode circuitry.

In solutions as described herein, the clock enable circuit in the reset domain crossing circuitry may comprise a flip-flop configured to produce the clock enable signal at an output terminal thereof; and a multiplexer configured to apply to the flip-flop a multiplexed input signal selected based on the reset write request signal from the transition decode circuitry and a falling edge signal indicative of a falling edge detected on the software reset signal from the software reset register, wherein the value of the multiplexed input signal is selected out of a first constant value, a second constant value, and the value of the clock enable signal produced by the flip-flop.

In solutions as described herein, the reset domain crossing circuitry may comprise a sampling flip-flop configured to receive the software reset write request signal and to produce a sampled write request signal; a rising edge detection circuit coupled to the sampling flip-flop and configured to produce a rising edge signal indicative of a rising edge detected in the sampled write request signal, and a respective clock enable circuit configured to de-assert the clock enable signal in response to receiving the rising edge signal, and to assert the clock enable signal in response to a falling edge detected on the software reset signal from the software reset register.

In solutions as described herein, the respective clock enable circuit may comprise an OR gate configured to produce the clock enable signal based on a falling edge detected on the software reset signal from the software reset register and the output from an AND gate receiving a logically inverted version of the rising edge signal, and the output from a respective flip-flop having the clock enable signal applied thereto.

In solutions as described herein, the rising edge detection circuit may comprise a rising edge detection flip-flop having applied thereto the sampled write request signal, and a rising edge detection AND gate having applied thereto the sampled write request signal and a logically inverted version of an output of the rising edge detection flip-flop.

In solutions as described herein, the reset domain crossing circuitry may comprise falling edge detection circuitry configured to produce a falling edge detection circuit configured to detect falling edges of software reset signal, wherein the falling edge detection circuitry comprises a falling edge detection flip-flop having applied thereto the software reset signal, and a falling edge detection AND gate having applied thereto a logically inverted version of the software reset signal and an output of the falling edge detection flip-flop.

In solutions as described herein, the reset domain crossing circuit may comprise a synchronizer configured to receive the software reset signal and produce a synchronized replica of the software reset signal, and the reset domain crossing circuitry is configured to process the software reset signal based on the synchronized replica thereof.

In solutions as described herein, the synchronizer may comprise a two-stage synchronizer including a cascaded arrangement of a first synchronizer flip-flop and a second synchronizer flip-flop.

The solutions described herein also relate to a system comprising a circuit according to solutions described herein. A processor system such as a microcontroller unit, for instance, may be exemplary of such a system comprising a first IP core including the first sequential circuitry configured to operate under the first clock signal, and a second IP core configured to operate under the second clock signal, and a register bank including the software reset register coupled to the transition decode circuitry and configured to produce the software reset signal in response to the software reset write request signal from the transition decode circuit.

Solutions as described herein are applicable in systems wherein the reset source is autonomously reset after propagating through delay cells (closed-loop system) .

### Brief description of the drawings

One or more embodiments will now be described, by way of example only, with reference to the annexed figures, wherein:
Figure 1 has already been described in the foregoing;
Figure 2 illustrates a portion of a processor system comprising two separate reset domains and a reset domain crossing circuit;
Figure 3 illustrates a possible way of implementing a reset domain crossing circuit according to solutions as described herein;
Figure 4 illustrates another possible way of implementing a reset domain crossing circuit according to solutions as described herein;
Figure 5 is a block diagram of a microcontroller unit comprising a clock/reset control unit;
Figure 6 is a circuit diagram of a clock/reset control unit including a reset domain crossing circuit in accordance with solutions as described herein.

The figures are drawn to clearly illustrate the relevant aspects of the embodiments and are not necessarily drawn to scale.

The edges of features drawn in the figures do not necessarily indicate the termination of the extent of the feature.

### Detailed description

In the ensuing description, one or more specific details are illustrated, aimed at providing an in-depth understanding of examples of embodiments of this description. The embodiments may be obtained without one or more of the specific details, or with other methods, components, materials, etc. In other cases, known structures, materials, or operations are not illustrated or described in detail so that certain aspects of embodiments will not be obscured.

Reference to "an embodiment" or "one embodiment" in the framework of the present description is intended to indicate that a particular configuration, structure, or characteristic described in relation to the embodiment is included in at least one embodiment. Hence, phrases such as "in an embodiment" or "in one embodiment" that may be present in one or more points of the present description do not necessarily refer to one and the same embodiment. Moreover, particular configurations, structures, or characteristics may be combined in any adequate way in one or more embodiments.

The headings/references used herein are provided merely for convenience and hence do not define the extent of protection or the scope of the embodiments.

Throughout the figures annexed herein, unless the context indicates otherwise, like parts or elements are indicated with like references/numerals and a corresponding description will not be repeated for the sake of brevity.

Also, for the sake of simplicity and ease of explanation, a same designation may be applied throughout this description to designate:
a certain node or line as well as a signal occurring at that node or line, and/or
a certain component (such as a capacitor, resistor or inductor or coil) as well as electrical parameters thereof.
When it is mentioned in the following that an element is "connected to" or "coupled to" another element, it should be understood that still another element may be interposed therebetween, as well as that the element may be connected or coupled directly to another element. On the contrary, when it is mentioned that an element is "connected directly to" or "coupled directly to" another element, it should be understood that still another element is not interposed therebetween.

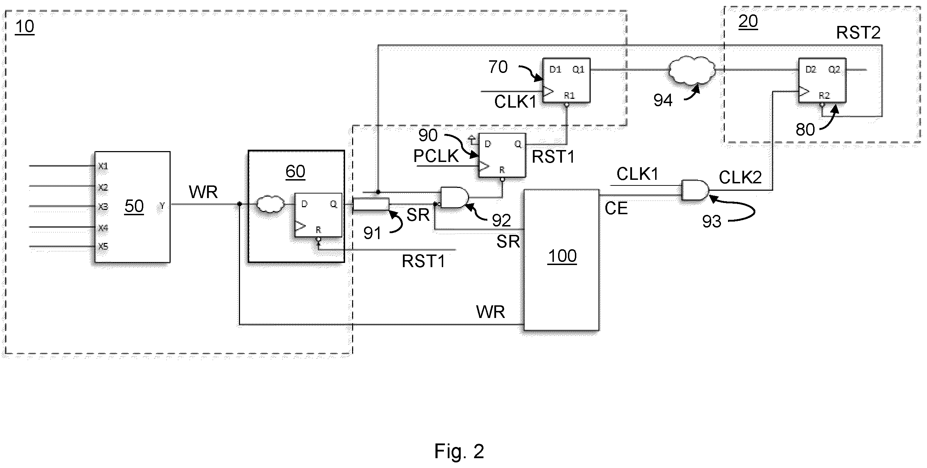

Figure 2 illustrates a portion of a processor including a first reset domain 10 and a second reset domain 20 based on the same general layout of the processor already discussed in connection with Figure 1.

For that reason, in Figure 2 (and possibly any other figures annexed herewith), unless the context indicates otherwise, parts or elements like parts or elements already discussed in connection with Figure 1 are indicated with like references/numerals and a corresponding description will not be repeated for the sake of brevity: essentially, in comparison with the processor already discussed in connection with Figure 1, the processor illustrated in Figure 2 comprises a reset domain crossing circuit 100 and a clock gating cell 93 intended to operate as detailed in the following.

In the processor illustrated (by way of example) in Figure 2, the transition decode circuit 50 may generate a software reset write request WR directed towards the software reset register 60, to which the transition decode circuit 50 is coupled to. Consequently, the software reset register 60 receives as input the software reset write request 60 and produces as output a software reset signal SR.

In response thereto, the software reset signal SR is output towards the delay line 91, which in turn outputs a software reset signal SR after a predetermined delay to an inverted input terminal of the AND gate 92. Accordingly, the other input terminal of the AND gate 92, which in the example considered is not inverted, is coupled to a reset signal RST2 directed towards the second reset domain 20, while the output terminal of the AND gate 92 is coupled to the inverted reset terminal R of the third flip-flop 90.

As already discussed previously, the third element 90 is a synchronizer configured to synchronize the reset signals for instance, a first reset signal RST1 directed towards the first reset domain 10, and a second reset signal RST2 directed towards the second reset domain 20. To this end, the synchronizer 90 is coupled to a main system clock PCLK, and has its input terminal D coupled to a constant logic level such as, for instance, a reference voltage, and its output terminal Q coupled to the reset terminals R of the flip-flops comprised in the first reset domain 10 such as, for instance, the first flip-flop 70. In general, the reset signals RST1, RST2 are de-asserted in order to perform a reset in the circuit they are directed to such as, for instance, the flip-flop 70.

In fact, as illustrated, the reset signals are received by the respective circuits at an inverted terminal, therefore the reset signals RST1 and RST2 shall be de-asserted in order to cause the flip-flops to reset.

In a possible implementation, the reset domain crossing circuit 100 is configured to disable the clock signal CLK2 directed to the second reset domain 20 in response to the assertion of the software reset signal SR in the first reset domain 10 i.e., the source reset domain, and, consequently, to re-enable the second reset domain 20 clock signal CLK2 in response to the de-assertion of the software reset signal SR in the first reset domain 10. The reset domain crossing circuit 100 thus facilitates operation such that the destination flip-flops i.e., the second flip-flop 80, do not receive the respective clock signal CLK2 when the source flip-flop or flip-flops (for instance, the first flip-flop 70) have a reset operation pending.

To this end, the reset domain crossing circuit 100 can output a clock enable signal CE, which is received by the clock gating cell 93 along with the clock signal CLK1 i.e., the clock signal received by the circuits in the first reset domain 10. Accordingly, the clock gating cell 93 produces as output the clock signal CLK2 i.e., the clock signal received by the second reset domain 20, on the basis of the value of the clock enable signal CE.

For example, such operation may be implemented via an AND gate. Therefore, the clock gating cell 93 substantially forwards the clock signal CLK2 to the second reset domain 20 if the clock enable signal CE is asserted whereas, on the contrary, gates the clock signal CLK2 is the clock enable signal CE is de-asserted. Hence, as mentioned above, the reset domain crossing circuit 100 can control whether forward or gate a clock signal to a destination reset domain.

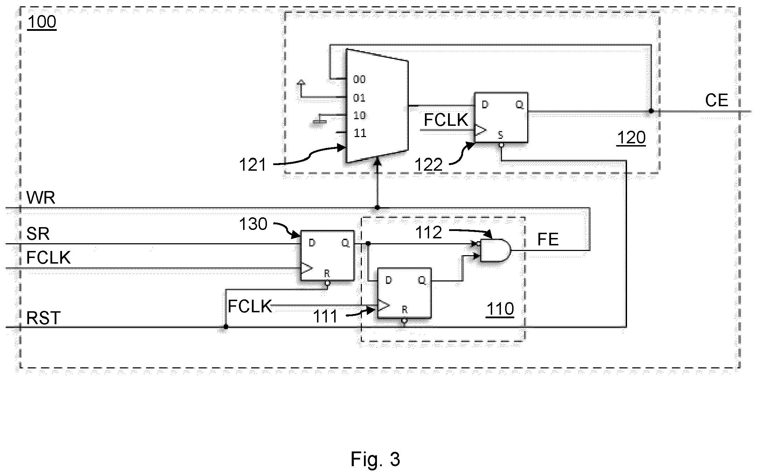

Figure 3 illustrates a possible way of implementing a reset domain crossing circuit according to solutions as described herein.

As illustrated in Figure 3, the reset domain crossing circuit 100 receives the software reset write request signal WR, the software reset signal SR, a free running clock FCLK, and a reset signal RST, and outputs the clock enable signal CE.

As illustrated, the reset domain crossing circuit 100 comprises a falling edge detection circuit 110, a clock enable circuit 120, and a synchronizer 130. In turn, the falling edge detector circuit 110 comprises a flip-flop 111 and an AND gate 112, and the clock disable circuit 120 comprises a multiplexer 121 and a flip-flop 122.

The falling edge detection circuit 110 is configured to assert an output falling-edge signal FE for the duration of one full clock cycle in response to detecting a falling edge on the software reset signal SR, hence detecting the de-assertion of the software reset signal SR.

The flip-flop 111 of the falling edge detection circuit 110 has an input terminal D coupled to an output terminal Q of the synchronizer 130, and an output terminal Q coupled to an input terminal of the AND gate 112, a reset terminal R coupled to the reset signal RST, and a clock terminal coupled to the free-running clock FCLK.

The AND gate 112 has another input terminal which is inverted and is coupled to the output terminal Q of the synchronizer 130, and produces as output i.e., as a result of an AND operation, the falling-edge signal FE.

The clock enable circuit 120 is configured to generate an output clock enable signal CE on the basis of the values of the falling-edge signal FE and of the software reset write request signal WR, which are received as selection signal by the multiplexer 121. In particular, the values of the falling-edge signal FE and of the software reset write request signal WR define three different possible cases:
a first case, wherein both the write request signal WR and the falling-edge signal FE are de-asserted, the clock enable signal CE holds its value from the previous clock cycle;
a second case, wherein the write request signal WR is asserted, the falling-edge signal FE is de-asserted, and the clock enable signal CE is de-asserted;
a third case, wherein the write request signal WR is de-asserted, the falling-edge signal FE is asserted, and the clock enable signal CE is asserted.

To this end, the multiplexer 121 receives a 2-bit selection signal, comprising the write request signal WR and the falling-edge signal FE, whereas the output terminal of the multiplexer 121 is coupled to the input terminal D of the flip-flop 122.

The flip-flop 122:
receives the reset signal RST on its set terminal S,
has an output terminal Q producing as an output the clock enable signal CE, and
is coupled to the free-running clock FCLK.

As illustrated in Figure 3, the clock enable signal CE produced as an output by the flip-flop 122 is fed back to the '00' input of the multiplexer 121, which corresponds to the case in which both the write request signal WR and the falling-edge signal FE are de-asserted, in such a way that when both the write request signal WR and the falling-edge signal FE are de-asserted, the multiplexer 121 produces as output the value taken by the clock enable signal CE in the previous clock cycle.

The '01' input of the multiplexer 121, which corresponds to the case in which the write request signal WR is asserted and the falling-edge signal FE is de-asserted, is connected to a constant logic '0' value such as, for instance, a ground terminal, in such a way that when the write request signal WR is asserted and the falling-edge signal FE is de-asserted, the multiplexer 121 outputs a '0' value to the flip-flop 122, which consequently outputs the de-asserted clock enable signal CE.

Similarly, the '10' input of the multiplexer 121, which corresponds to the case in which the write request signal WR is de-asserted and the falling-edge signal FE is asserted, is connected to a constant logic '1' value such as, for instance, a reference voltage, in such a way that when the write request signal WR is de-asserted and the falling-edge signal FE is asserted, the multiplexer 121 outputs a '1' value to the flip-flop 122, which consequently outputs the asserted clock enable signal CE.

The '11' input of the multiplexer 121 is not used and is left floating: this may in fact be regarded as a forbidden configuration with a '11' condition held to correspond to the default one, that is, '00'.

The synchronizer 130 facilitates correct operation of the falling edge detector circuit 110 in case the software reset signal SR is de-asserted asynchronously i.e., is de-asserted at a time instant comprised between a rising edge and a falling edge of the system clock. To this end, the synchronizer 130 has an input terminal D coupled to the software reset signal SR, a reset terminal R coupled to the reset signal RST, a clock terminal coupled to the free-running clock FCLK, and an output terminal Q coupled to the falling edge detection circuit 110 (as illustrated, to an input terminal D of the flip-flop 111 and to an inverted input of the AND gate 112), outputting a synchronized (delayed, for instance) replica of the software reset signal SR.

The synchronizer circuit 130 may be regarded as comprising two cascaded flip-flops i.e., with an output terminal of the first flip-flop coupled to an input terminal of the second flip-flop, wherein the first flip-flop samples the input signal from the source clock domain, and the second flip-flop samples the thus synchronized signal using the destination clock, thus rendering the output of the second flip-flop safe for use in the destination clock domain.

To summarize, the reset domain crossing circuit 100 is configured to output a clock-enable signal CE which is de-asserted when a software reset write request WR assertion is detected, and is asserted when a software reset SR de-assertion is detected (in fact, another WR request cannot happen because PCLK is gated).

Correct operation of the reset domain crossing circuit 100 is facilitated by the free-running clock FCLK having a frequency which is equal to the frequency of the clock of software reset register 60.

For example, in embodiments relating to solutions complying with the Advanced Microcontroller Bus Architecture (AMBA) - wherein the software reset register 60 is accessed through an APB (Advanced Peripheral Bus), and thus the software reset write request signal WR is generated in response to an APB transaction - the free-running clock FCLK advantageously has the same frequency of the APB main system clock PCLK. In fact, the clock PCLK can be derived from the clock FCLK.

In its action as the clock that is responsible for generating the software reset signal SR i.e., the main system clock PCLK, is gated by the clock-enable signal CE, and adequate operation the circuit illustrated in Figure 3 is facilitated by the main system clock PCLK having the same frequency of the free-running clock FCLK.

It is observed that, if the main system clock PCLK frequency is lower than the free-running clock FCLK frequency, the software reset signal SR may not be generated in so far as the reset domain crossing circuit 100 disables the main system clock PCLK before generating the software reset signal SR (in fact the flip-flop 60 uses another PCLK edge to sample the WR request), since the reset domain crossing circuit 100 operates at a clock frequency given by the free-running clock FCLK, which is assumed to be higher than the main system clock PCLK.

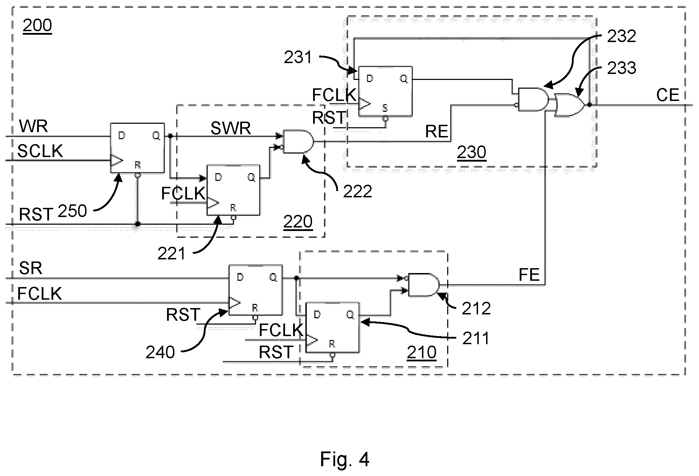

That issue concerning clock frequencies can be addressed as illustrated in Figure 4, which illustrates another possible way of implementing a reset domain crossing circuit according to solutions as described herein.

A reset domain crossing circuit 200 as illustrated in Figure 4, receives as an input the software reset write request signal WR, the software reset signal SR, the free running clock FCLK, the reset signal RST, and an auxiliary clock signal SCLK, and produces as an output the clock enable signal CE.

The reset domain crossing circuit 200 comprises a falling edge detection circuit 210, a rising edge detection circuit 220, a clock enable circuit 230, a synchronizer 240, and a flip-flop 250.

In turn, the falling edge detector circuit 210 comprises a flip-flop 211 and an AND gate 212, the rising edge detector circuit 220 comprises a flip-flop 221 and an AND gate 222, while the clock enable circuit 230 comprises a flip-flop 231, an AND gate 232, and an OR gate 233.

The falling edge detection circuit 210 is configured to assert an output falling-edge signal FE for the duration of one full clock cycle in response to detecting a falling edge on the software reset signal SR, hence detecting the de-assertion of the software reset signal SR.

The flip-flop 211 of the falling edge detection circuit 110 has an input terminal D coupled to an output terminal Q of the synchronizer 240, an output terminal Q coupled to an input of the AND gate 212, a reset terminal R coupled to the reset signal RST, and a clock terminal coupled to the free-running clock FCLK.

Accordingly, the AND gate 212 has another input terminal which is inverted and coupled to an output terminal Q of the synchronizer 240, and produces as an output, that is, as a result of an AND operation, the falling-edge signal FE.

The flip-flop 250 is used to sample the software reset write request signal WR at a sampling frequency dictated by the auxiliary clock signal SCLK. Specifically, the flip-flop 250 receives as an input at an input terminal D the write request signal WR, with the auxiliary clock signal SCLK being used as local clock for the flip-flop 250 and, accordingly, a sampled write request signal SWR is produced at the output terminal Q of the flip-flop 250.

The auxiliary clock signal SCLK is synchronous with the free running clock signal FCLK and can have a lower frequency than the latter.

In solutions complying with the Advanced Microcontroller Bus Architecture (AMBA), the software reset write request signal WR is generated in response to an APB (Advanced Peripheral Bus) transaction, and the auxiliary clock signal SCLK can coincide with the main system clock PCLK (the clock signal SCLK can thus coincide with the clock signal applied to the software reset register 60).

It is observed that a difference between the free running clock FCLK and the main system clock PCLK lies in that the free running clock FCLK is continuously running, whereas the main system clock PCLK may be stopped or gated under some conditions.

Like the falling edge detection circuit 210, the rising edge detection circuit 220 is configured to assert an output rising-edge signal RE for the duration of one full clock cycle in response to detecting a rising edge on the sampled write request signal SWR originating from the flip-flop 250, hence detecting the assertion of the sampled write request signal SWR.

The flip-flop 221 of the rising edge detection circuit 220 has an input terminal D coupled to the output terminal Q of the flip-flop 250, an output terminal Q coupled to an inverted input of the AND gate 222, a reset terminal R coupled to the reset signal RST, and a clock terminal coupled to the free-running clock FCLK.

The AND gate 222 has another input terminal which is coupled to the output terminal Q of the flip-flop 250, and produces as output, that is, as a result of an AND operation, the rising-edge signal RE.

The clock enable circuit 230 is configured to generate an output clock enable signal CE on the basis of the values of the falling-edge signal FE, and of the raising-edge signal RE.

The value of the clock enable signal CE depends on the values of the falling-edge signal FE and of the raising-edge signal RE, defining three cases:
a first case, wherein both the falling-edge signal FE and the rising-edge signal RE are de-asserted: the clock enable signal CE holds its value from the previous clock cycle;
a second case, wherein the falling-edge signal FE is de-asserted and the rising-edge signal RE is asserted, and the clock enable signal CE is de-asserted in order to disable the clock signal directed towards the second clock domain 20, that is, clock gating is performed; and
a third case, wherein the falling-edge signal FE is asserted and the rising-edge signal RE is de-asserted, the clock enable signal CE is asserted in order to enable the clock signal directed towards the second clock domain 20, that is, clock gating is interrupted.

The OR gate 233 receives as inputs the falling-edge signal FE originating from the falling edge detector circuit 210, and the output signal produced by the AND gate 232.

In turn, the AND gate 232 receives as an input the rising-edge signal RE originating from the rising edge detector circuit 220, which is received at an inverting input terminal, and the output signal produced by the flip-flop 231.

The flip-flop 231 has a data input terminal D connected to the output of the OR gate 233, an output terminal Q connected to the inverting input of the AND gate 232, and a set terminal S plus a clock terminal coupled to the reset signal RST and the free-running clock FCLK, respectively.

Hence, in the arrangement shown in Figure 4 the flip-flop 231 samples the output clock enable signal CE in order to provide the sampled value as an output of the clock enable circuit 230 when both the falling-edge signal FE and the rising-edge signal RE are de-asserted.

In fact, as illustrated in Figure 4, when both the falling-edge signal FE and the rising-edge signal RE are de-asserted, the value of the clock enable signal CE is sampled by the flip-flop 231 and is subsequently fed to the AND gate 232.

In the example considered, the rising-edge signal RE is de-asserted and is received on an inverting input; the resulting output of the AND gate 232 maintains the same value of the sampled clock enable signal CE outputted by the flip-flop 231.

Consequently, the output of the AND gate 232 is fed to the OR gate 233 which performs an OR operation with the falling-edge signal FE, which in the example considered is de-asserted i.e., equal to '0', hence the clock enable signal CE sampled from the previous clock cycle is outputted by the OR gate 233.

In the implementation of Figure 4, in response to the falling-edge signal FE being de-asserted and the rising-edge signal RE being asserted, the AND gate 232, and consequently the OR gate 233, output a value equal to '0' due to the fact that the rising-edge signal RE is received at the inverted input of the AND gate 232, resulting in a clock enable signal CE equal to '0'.

Similarly, when the falling-edge signal FE is asserted and the rising-edge signal RE is de-asserted, the AND gate 232, and consequently the OR gate 233, output a value equal to '1' due to the fact that the falling-edge signal FE is equal to '1' and it is received at the input of the OR gate 233, resulting in a clock enable signal CE equal to '1'.

The synchronizer 240 is provided in order to facilitate adequate operation of the falling edge detector circuit 210 in case the software reset signal SR is asserted or de-asserted asynchronously i.e., is asserted or de-asserted at a time instant comprised between a rising edge and a falling edge of the system clock.

To this end, the synchronizer 240 has an input terminal D coupled to the software reset signal SR, a reset terminal R coupled to the reset signal RST, a clock terminal coupled to the free-running clock FCLK, and an output terminal Q coupled to the falling edge detection circuit 210, in particular to the input terminal D of the flip-flop 211 and to the inverted input terminal of the AND gate 212. As discussed previously, also in this case the synchronizer 240 outputs a synchronized (delayed, for instance) replica of the software reset signal SR, which is received at the input terminal D of the synchronizer 240. In various possible implementations, the synchronizer 240 introduces a delay of two clock cycles.

As discussed above, the synchronizer circuit 240 may comprise two cascaded flip-flops, that is, with the output terminal of the first flip-flop coupled to the input terminal of the second flip-flop, wherein the first flip-flop samples the input signal, namely the software reset signal SR, from the source clock domain, and the second flip-flop samples the synchronized (delayed, for instance) signal using the destination clock, thus rendering the output of the second flip-flop safe for use in the destination clock domain.

In solutions as described herein, the reset domain crossing circuitry 100 comprises a clock enable circuit 120 configured to de-assert the clock enable signal CE in response to receiving the software reset write request signal WR from the transition decode circuitry 50 in the absence of a falling edge detected on the software reset signal SR from the software reset register 60: that is, no falling edge is detected on the software reset signal SR when receiving the write request WR.

In solutions as described herein, the clock enable circuit 120 is configured to assert the clock enable signal CE in response to a falling edge detected on the software reset signal SR from the software reset register 60 in the absence of a software reset write request signal WR from the transition decode circuitry 50: that is, no write request WR is received when falling edge is detected on the software reset signal SR.

With reference to the first implementation of a reset domain crossing circuit 100 as illustrated in Figure 3, it is observed that the second implementation of a domain crossing circuit 200 described in connection with Figure 4 advantageously addresses some issues that may arise in connection with the first implementation of the reset domain crossing circuit 100 illustrated in Figure 3.

The flip-flop 250 added to the reset domain crossing circuit 200 in Figure 4 facilitates sampling of the write request signal WR originating from transition decode circuit 50, which operates at a frequency determined by the auxiliary clock signal SCLK. Consequently, the reset signal SR is generated before the main system clock PCLK, which is received as auxiliary clock signal SCLK, is disabled.

As discussed in connection with the first implementation of the reset domain crossing circuit 100 of Figure 3, also the implementation of Figure 4 benefits from the frequency of the free-running clock FCLK being higher than or equal to the frequency of the main system clock PCLK in order to operate correctly. The implementation of Figure 4 has a negligible die area overhead with respect to the implementation of Figure 4.

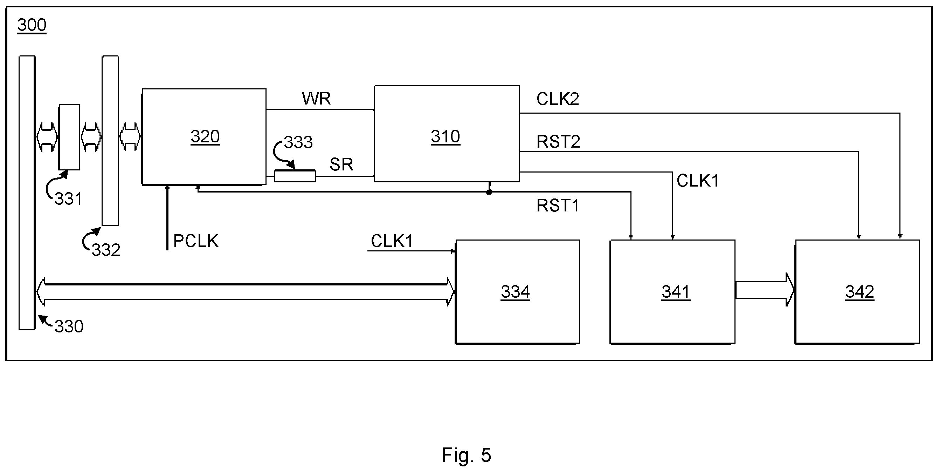

Figure 5 illustrates, by way of example, a microcontroller unit 300 comprising a reset domain crossing circuit 100 according to solutions as described herein.

In the example considered, the microcontroller 300 comprises a processor 334 coupled to a main system bus 330, a peripheral bus 332, and an interface circuit 331 coupled to the main system bus 330 and to the peripheral bus 332.

In embodiments relating to the Advanced Microcontroller Bus Architecture (AMBA), the main system bus 330 may be an Advanced High-Performance Bus (AHB), whereas the peripheral bus 332 may be an Advanced Peripheral Bus (APB).

The peripheral bus 332 is coupled to a register bank 320, which comprises the software reset register 60. In turn, the register bank 320 is coupled to a clock/reset control unit 310 which receives a write request signal WR and a software reset signal SR from the register bank 320, with a delay cell 333 being provided along the path carrying the software reset signal SR.

In various embodiments, the microcontroller 300 may comprise a plurality of IP (Intellectual Property) cores i.e., reusable units of logic, cell, or integrated circuit layout designs belonging to a specific party, such as a first IP core 341 and a second IP core 342.

In the example shown, the first IP core is comprised in the source reset domain 10, as it receives a clock signal CLK1 and a reset signal RST1 from the clock/reset control unit 310, whereas the second IP core is comprised in the destination reset domain 20, as it receives a clock signal CLK2 and a reset signal RST2 from the clock/reset control unit 310. In particular, the first IP core 341 may produce as output data directed towards the second IP core 342. In general, the first IP core 341 and the second IP core 342 may be regarded as comprising respectively a first sequential circuit 70 e.g., a first flip-flop 70, and a second sequential circuit 80 e.g., a second flip-flop 80. Since the two IP cores are comprised in different reset domains and are coupled with each other, the clock/reset control unit 310 shall perform the clock gating and/or clock forwarding properly, in order to assure a correct operation of the microcontroller 300. Such clock/reset control unit 310 can be configured (in a manner known per se to those of skill in the art) to manage the generation and/or gating of the clock and reset signals in the microcontroller unit 300.

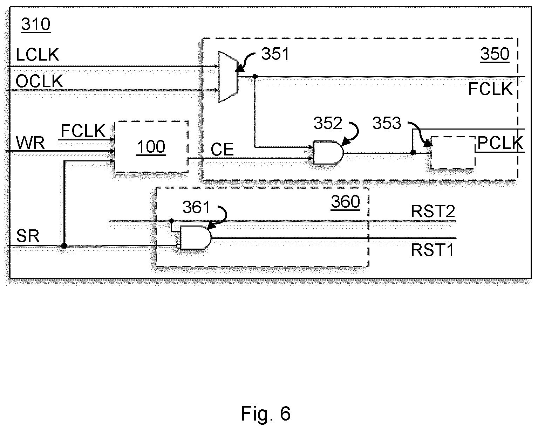

Figure 6 is an exemplary detailed circuit diagram of the clock/reset control unit 310.

As illustrated, the clock/reset control unit 310 receives as input one or more clock signals such as, for example, a clock signal generated by a phase-locked loop LCLK and/or a clock generated by an oscillator OCLK, the software reset write request signal WR, and the software reset signal SR, and produces as output one or more system clock signals FCLK, and one or more reset signals RST1, RST2, namely one reset signal for each reset domain comprised in the microcontroller 300.

In various possible implementations, the clock/reset control unit 310 comprises a clock control unit 350, a reset control unit 360, and a reset domain crossing circuit 100 realized in accordance with the solution described in the foregoing.

In turn, the clock control unit 350 is configured to perform the forwarding or gating of clock signals throughout the microcontroller unit 300. To this end, the clock control unit 350 comprises a glitch-free multiplexer 351. This may facilitate switching the clock source of dynamically (in this case from LCLK to OCLK and vice versa, for instance) without generating glitches on clock output.

The multiplexer 351 receives as input one or more clock signals for instance, the phase-locked loop clock LCLK and the oscillator clock OCLK, and produces as output a system clock signal FCLK. The system clock signal FCLK is received by a clock gating unit 352 along with the clock enable signal CE generated by the reset domain crossing circuit 100. In various possible implementations, the clock gating unit 352 provided corresponds to the clock gating cell 93 described in the foregoing, which can be implemented with an AND gate.

The reset domain crossing circuit 100 receives as input the system clock signal FCLK the write request signal WR, and the software reset signal SR, and produces as output the clock enable signal CE. Accordingly, the clock gating unit 352 produces as output the system clock signal FCLK, which is eventually divided by a frequency divider 353.

The reset control unit 360 comprises an AND gate 361 receiving as input the software reset signal SR at an inverted input terminal, and the reset signal RST2. Accordingly, the AND gate 361 produces as output the reset signal RST1, that is, the reset signal aimed towards the source reset domain 10.

The AND gate 361 produces the first reset signal RST1 in response to the software reset signal SR being de-asserted and the second reset signal RST2 asserted. Thus, the arrangement of clock/reset control unit 310 described herein advantageously provides a correct timing of the reset signals across the microcontroller unit 300, along with a properly timed clock gating.

To summarize, the solutions described herein provide hardware implemented closed loop gating of clock signals, re-enabling the clock signal directed to the destination clock domain in response to a de-assertion of the software reset signal in the source domain.

Gating the clock of flip-flops in the destination reset domain during reset of the source reset domain allows to deal with possible metastability in the setup/hold phases, since the destination flops are not receiving the clock when the source is reset. A hardware module, that is, the reset domain crossing circuit (100 or 200) described herein, disables the clock of destination reset domain in response to a software reset occurring in the source reset domain, and subsequently re-enables the clock only after that the reset of source reset domain is propagated.

The closed loop structure of the present solution advantageously prevents reset domain crossing issues across the whole area of an integrated circuit die, even in the presence of delay cells along the reset signal paths. With respect to other well-known open loop solutions, wherein the number of clock cycles in which the destination clock is gated is typically sized considering a worst-case scenario, the closed loop reset domain crossing circuit 100 advantageously allows speed saving due to the fact that the clock gating time changes accordingly with reset delay variation, thus avoiding detrimental losses of time.

Without prejudice to the underlying principles, the details and embodiments may vary, even significantly, with respect to what has been described by way of example only, without departing from the extent of protection.

The extent of protection is determined by the annexed claims.

## Claims

1. A circuit, comprising:
first sequential circuitry (70) configured to operate under a first clock signal (CLK1) in a first clock domain (10),
second sequential circuitry (80) configured to operate under a second clock signal (CLK2) in a second clock domain (20),
transition decode circuitry (50) configured to generate a software reset write request signal (WR),
a software reset register (60) coupled to the transition decode circuitry (50) and configured to produce a software reset signal (SR) in response to the software reset write request signal (WR) from the transition decode circuit (50),
reset domain crossing circuitry (100; 200) configured to de-assert a clock enable signal (CE) in response to receiving the software reset write request signal (WR) from the transition decode circuitry (50), and to assert said clock enable signal (CE) in response to a falling edge detected on the software reset signal (SR) from the software reset register (60), and
a clock gating cell (93) coupled to the reset domain crossing circuitry (100; 200) and configured to disable the second clock signal (CLK2) of the second sequential circuitry (80) in response to the clock enable signal (CE) being de-asserted by the reset domain crossing circuitry (100; 200).

2. The circuit of claim 1, wherein the reset domain crossing circuitry (100) comprises a clock enable circuit (120) configured to:
de-assert said clock enable signal (CE) in response to receiving the software reset write request signal (WR) from the transition decode circuitry (50) in the absence of a falling edge detected on the software reset signal (SR) from the software reset register (60), and
assert said clock enable signal (CE) in response to a falling edge detected on the software reset signal (SR) from the software reset register (60) in the absence of a software reset write request signal (WR) from the transition decode circuitry (50).

3. The circuit of claim 2, wherein the clock enable circuit (120) in the reset domain crossing circuitry (100) comprises:
a flip-flop (122) configured to produce said clock enable signal (CE) at an output terminal thereof; and
a multiplexer (121) configured to apply to the flip-flop (122) a multiplexed input signal selected based on said reset write request signal (WR) from the transition decode circuitry (50) and a falling edge signal (FE) indicative of a falling edge detected on the software reset signal (SR) from the software reset register (60), wherein the value of the multiplexed input signal is selected out of:
a first constant value (01),
a second constant value (10) different from first constant value (01), and
the value of the clock enable signal (CE) produced by the flip-flop (122).

4. The circuit according to claim 1, wherein the reset domain crossing circuitry (200) comprises:
a sampling flip-flop (250) configured to receive said software reset write request signal (WR) and to produce a sampled write request signal (SWR);
a rising edge detection circuit (220) coupled to the sampling flip-flop (250) and configured to produce a rising edge signal (RE) indicative of a rising edge detected in the sampled write request signal (SWR), and
a respective clock enable circuit (230) configured to:
de-assert the clock enable signal (CE) in response to receiving said rising edge signal (RE), and
to assert said clock enable signal (CE) in response to a falling edge (FE) detected on the software reset signal (SR) from the software reset register (60).

5. The circuit of claim 4, wherein said respective clock enable circuit (230) comprises:
an OR gate (233) configured to produce said clock enable signal (CE) based on a falling edge (FE) detected on the software reset signal (SR) from the software reset register (60) and the output from an AND gate (232) receiving:
a logically inverted version of said rising edge signal (RE), and
the output from a respective flip-flop (231) having said clock enable signal (CE) applied thereto.

6. The circuit of claim 4 or claim 5, wherein the rising edge detection circuit (220) comprises:
a rising edge detection flip-flop (221) having applied thereto said sampled write request signal (SWR), and
a rising edge detection AND gate (222) having applied thereto said sampled write request signal (SWR) and a logically inverted version of an output of the rising edge detection flip-flop (221).

7. The circuit of any of the previous claims, wherein the reset domain crossing circuitry (100) comprises falling edge detection circuitry configured to produce a falling edge detection circuit (FE) configured to detect falling edges of software reset signal (SR), wherein the falling edge detection circuitry comprises:
a falling edge detection flip-flop (111; 211) having applied thereto said software reset signal (SR), and
a falling edge detection AND gate (112; 212) having applied thereto a logically inverted version of said software reset signal (SR) and an output of the falling edge detection flip-flop (111; 211).

8. The circuit of any of the previous claims, wherein:
the reset domain crossing circuit (100; 200) comprises a synchronizer (130; 240) configured to receive said software reset signal (SR) and produce a synchronized replica of the software reset signal (SR), and
the reset domain crossing circuitry (100; 200) is configured to process the software reset signal (SR) based on said synchronized replica thereof.

9. The circuit of claim 8, wherein the synchronizer (130; 240) comprises a two-stage synchronizer including a cascaded arrangement of a first synchronizer flip-flop and a second synchronizer flip-flop.

10. A system (300), comprising a circuit according to any of claims 1 to 9, the system comprising:
a first IP core (341) including said first sequential circuitry (70) configured to operate under said first clock signal (CLK1), and
a second IP core (342) configured to operate under said second clock signal (CLK2), and
a register bank (320) including said software reset register (60) coupled to the transition decode circuitry (50) and configured to produce said software reset signal (SR) in response to the software reset write request signal (WR) from the transition decode circuit (50).
